# EUROPEAN PATENT APPLICATION

(11) **EP 4 738 169 A1**
(43) Date of publication of application: **06.05.2026**
(21) Application number: 25213419.2
(22) Date of filing: 04.11.2025
(51) Int. Cl.: G06F 21/62, G06Q 10/1093, H04L 9/40, H04W 12/02, G10L 15/26

(54) **TRANSCRIPTION SYSTEM AND METHOD**

(30) Priority: 04.11.2024 US 202418936927
(71) Applicant: Mitel Networks Corporation, Ottawa, Ontario K2K 3K1 (CA)
(72) Inventor: Papadopoulos, Gavriil, 11528 Athens (GR); Tsiatsikas, Zisis, 55534 Thessaloniki (GR)
(74) Representative: McDougall, James

(57) **Abstract**

Systems and methods including one or more processors and one or more non-transitory storage devices storing computing instructions configured to run on the one or more processors and perform acts of receiving one or more electronic signals recording a meeting between two or more individuals; analyzing the one or more electronic signals to determine a privacy level of the meeting; when the privacy level is above a predetermined threshold, initializing a predictive software application locally on a mobile electronic device of at least one of the two or more individuals; and when the privacy level is below the predetermined threshold, initializing the predictive software application remotely on a cloud server. Other embodiments are disclosed herein.

## Description

### TECHNICAL FIELD

This disclosure relates generally to electronic communication methods, systems, and devices, and more specifically relates to electronic communication methods, systems, and devices, that employ context specific invocation of predictive models and context specific storage of their outputs.

### BACKGROUND

In recent years, as the volume of digital data has grown, so too has the need for robust methods of protecting sensitive information. Personal data, such as financial records, medical histories, and other personally identifiable information (PII), is increasingly stored and processed on various digital platforms (e.g., locally and/or on remote servers). Further, many professions (e.g., legal, engineering, medical etc.) often handle and record confidential information on their electronic devices. While these digital systems offer significant benefits in terms of accessibility and scalability, they also introduce substantial risks associated with unauthorized access, data breaches, and compliance challenges with regulatory standards for data privacy. Further, for many professions, unauthorized access to sensitive data can lead to for harsh professional and legal consequences.

These problems have been exacerbated by the rise of predictive software applications. For example, due to the black box nature of many of these software applications, it can be unclear where inputs and/or outputs of a predictive software application is stored and how they are used once they are stored.

Therefore, in view of the above, there is a need for a novel system and method for invoking predictive software applications and storing their inputs and outputs.

### SUMMARY

A first aspect of this disclosure provides a system comprising: one or more processors; and one or more non-transitory memories storing computing instructions configured to communicate with the one or more processors and cause the one or more processors to perform: receiving one or more electronic signals recording a meeting between two or more individuals; analyzing the one or more electronic signals to determine a privacy level of the meeting; when the privacy level is above a predetermined threshold, initializing a predictive software application locally on a mobile electronic device of at least one of the two or more individuals; and when the privacy level is below the predetermined threshold, initializing the predictive software application remotely on a cloud server.

The computing instructions may be further configured to cause the one or more processors to perform: prior to receiving the one or more electronic signals, analyzing a calendar invite scheduling the meeting; and pre-loading one or more predictive software applications onto a mobile device.

Analyzing the calendar invite may comprise analyzing a specialty of the at least one of the two or more individuals; and the one or more predictive software applications comprise one or more specialized transcription software applications.

The one or more predictive software applications may comprise a predictive software application trained on training data encoding a specialty of the at least one of the two or more individuals.

The analyzing the one or more electronic signals may comprise analyzing one or more of voice tonality, background noises, gyroscope data, or open software applications to determine the privacy level.

The analyzing the one or more electronic signals may comprise analyzing a voice tonality to determine whether the at least one of the two or more individuals is whispering; and the computing instructions may be further configured to cause the one or more processors to perform: determining that the privacy level is above the predetermined threshold.

The computing instructions may be further configured to cause the one or more processors to perform: after transcribing the meeting, distributing an output of the one or more predictive software applications to each mobile electronic device of the two or more individuals.

A second aspect of this disclosure provides a method comprising: receiving one or more electronic signals recording a meeting between two or more individuals; analyzing the one or more electronic signals to determine a privacy level of the meeting; when the privacy level is above a predetermined threshold, initializing a predictive software application locally on a mobile electronic device of at least one of the two or more individuals; and when the privacy level is below the predetermined threshold, initializing the predictive software application remotely on a cloud server.

The method may further comprise: prior to receiving the one or more electronic signals, analyzing a calendar invite scheduling the meeting; and pre-loading one or more predictive software applications onto a mobile device.

The analyzing the calendar invite may comprises analyzing a specialty of the at least one of the two or more individuals; and the one or more predictive software applications may comprise one or more specialized transcription software applications.

The one or more predictive software applications comprise a predictive software application trained on training data encoding the specialty of the at least one of the two or more individuals.

The analyzing the one or more electronic signals may comprises analyzing one or more of voice tonality, background noises, gyroscope data, or open software applications to determine the privacy level.

The analyzing the one or more electronic signals may comprises analyzing a voice tonality to determine whether the at least one of the two or more individuals is whispering; and the method may further comprise: determining that the privacy level is above the predetermined threshold.

The method may further comprise: after transcribing the meeting, distributing an output of the one or more predictive software applications to each mobile electronic device of the two or more individuals.

A third aspect of this disclosure provides one or more articles of manufacture including one or more non-transitory, tangible computer readable storage mediums having instructions stored thereon that, in response to execution by one or more processors, cause the one or more processors to perform: receiving one or more electronic signals recording a meeting between two or more individuals; analyzing the one or more electronic signals to determine a privacy level of the meeting; when the privacy level is above a predetermined threshold, initializing a predictive software application locally on a mobile electronic device of at least one of the two or more individuals; and when the privacy level is below the predetermined threshold, initializing the predictive software application remotely on a cloud server.

The instructions may further cause the one or more processors to perform: prior to receiving the one or more electronic signals, analyzing a calendar invite scheduling the meeting; and pre-loading one or more predictive software applications onto a mobile device.

The analyzing the calendar invite may comprise analyzing a specialty of the at least one of the two or more individuals; and the one or more predictive software applications may comprise one or more specialized transcription software applications.

The one or more predictive software applications may comprise a predictive software application trained on training data encoding a specialty of the at least one of the two or more individuals.

The analyzing the one or more electronic signals may comprise analyzing one or more of voice tonality, background noises, gyroscope data, or open software applications to determine the privacy level.

The analyzing the one or more electronic signals may comprise analyzing a voice tonality to determine whether the at least one of the two or more individuals is whispering; and the instructions may further cause the one or more processors to perform: determining that the privacy level is above the predetermined threshold.

### BRIEF DESCRIPTION OF THE DRAWINGS

To facilitate further description of the embodiments, the following drawings are provided in which:
FIG. 1 illustrates a flowchart for a method, according to an embodiment;
FIG. 2 illustrates a representative block diagram of a computer network, according to an embodiment; and
FIG. 3 illustrates a representative block diagram of a computer system, according to an embodiment.

### DESCRIPTION OF EXAMPLES OF EMBODIMENTS

A number of embodiments can include a system. The system can include one or more processors and one or more non-transitory computer-readable storage devices. The one or more non-transitory computer-readable storage devices can store computing instructions. The computing instructions can be configured to communicate with the one or more processors and cause the one or more processors to perform receiving one or more electronic signals recording a meeting between two or more individuals; analyzing the one or more electronic signals to determine a privacy level of the meeting; when the privacy level is above a predetermined threshold, initializing a predictive software application locally on a mobile electronic device of at least one of the two or more individuals; and when the privacy level is below the predetermined threshold, initializing the predictive software application remotely on a cloud server.

Various embodiments include a method. The method can comprise receiving one or more electronic signals recording a meeting between two or more individuals; analyzing the one or more electronic signals to determine a privacy level of the meeting; when the privacy level is above a predetermined threshold, initializing a predictive software application locally on a mobile electronic device of at least one of the two or more individuals; and when the privacy level is below the predetermined threshold, initializing the predictive software application remotely on a cloud server.

Various embodiments can include an article of manufacture. The article of manufacture can include a non-transitory, tangible computer readable storage medium. The non-transitory, tangible computer readable storage medium can store instructions that, in response to execution by a computer, cause the computer to perform operations comprising receiving one or more electronic signals recording a meeting between two or more individuals; analyzing the one or more electronic signals to determine a privacy level of the meeting; when the privacy level is above a predetermined threshold, initializing a predictive software application locally on a mobile electronic device of at least one of the two or more individuals; and when the privacy level is below the predetermined threshold, initializing the predictive software application remotely on a cloud server.

In many embodiments, the techniques described herein can provide a practical application and several technological improvements. In some embodiments, the techniques described herein can provide for improved data security. These techniques described herein can provide a significant improvement over conventional approaches of maintain data used or generated by predictive software applications, such as treating predictive software applications like black box. In many embodiments, the techniques described herein can beneficially make determinations based on dynamic information that describes current conditions and/or conditions that have occurred during the same day of a meeting. In this way, the techniques described herein can avoid problems with vulnerable data by quickly imposing data privacy restrictions on data created during a meeting.

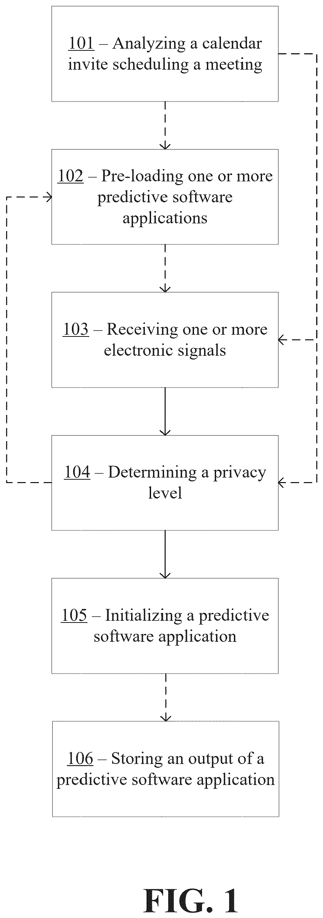

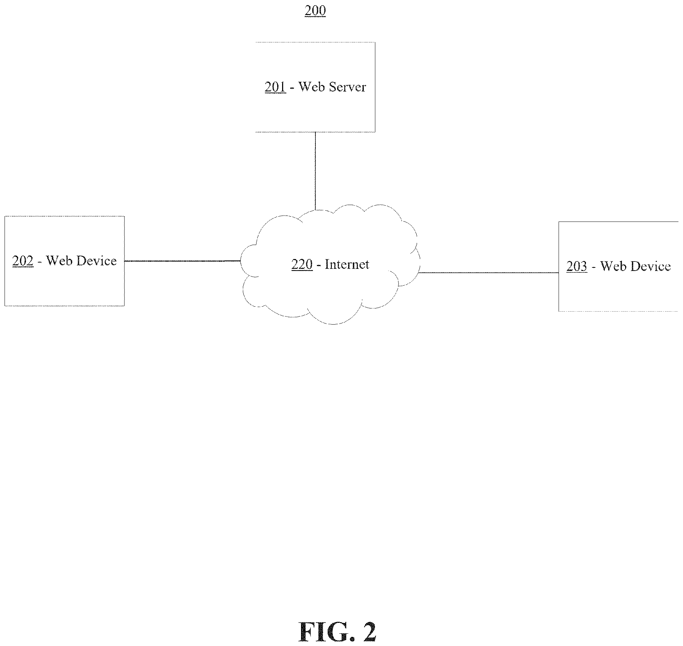

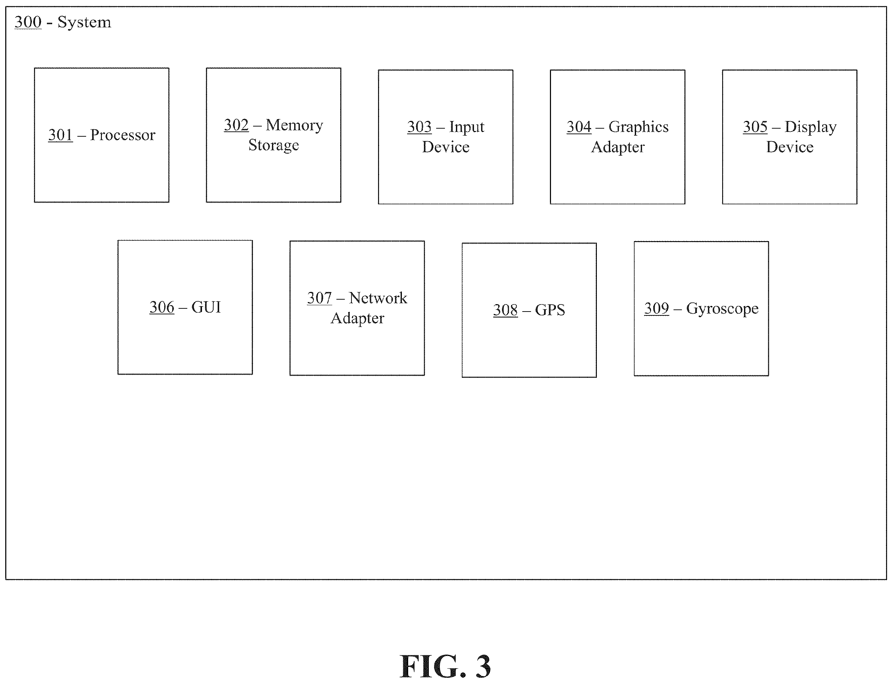

Turning ahead in the drawings, FIG. 1 illustrates a flow chart for a method 100, according to an embodiment. Method 100 is merely exemplary and is not limited to the embodiments presented herein. Method 100 can be employed in many different embodiments or examples not specifically depicted or described herein. In some embodiments, the activities of method 100 can be performed in the order presented. In other embodiments, the activities of method 100 can be performed in any suitable order. In still other embodiments, one or more of the activities of method 100 can be combined or skipped. In many embodiments, system 300 (FIG. 3) can be suitable to perform method 100 and/or one or more of the activities of method 100. In these or other embodiments, one or more of the activities of method 100 can be implemented as one or more computer instructions configured to run at one or more processing modules and configured to be stored at one or more non-transitory memory storage modules. Such non-transitory memory storage modules can be part of a computer system such as web server 201 and/or web devices 202, 203 (FIG. 2). The processing module(s) can be similar or identical to the processing module(s) described above with respect to computer system 300 (FIG. 3).

In many embodiments, method 100 can optionally comprise an activity 101 of analyzing a calendar invite scheduling the meeting. In some embodiments, activity 101 can be performed before one or more of activities 102-106. In other embodiments, activity 101 can be skipped (e.g., when a meeting occurs spontaneously and/or without a calendar invite. A calendar invite can be understood as a notation used to organize and/or facilitate scheduling among individuals. In various embodiments, a calendar invite can comprise an electronic calendar invite.

An electronic calendar invite can comprise a digital notification mechanism used to organize and facilitate scheduling among participants by allowing one or more users to propose, accept, and/or manage a meeting or event within a digital calendar system. An electronic invite can comprise several functionalities designed to streamline the scheduling process, including event details, response tracking, and automated updates. Upon creation of a calendar invite, an initiating user specifies relevant event details such as date, time, location, and/or duration. Additional information, such as an event title, an event description, presentation materials, and/or an agenda can also be included. An initiating user selects invitees who receive notifications their designated email or messaging systems. Calendar invites typically allow invitees to confirm their availability by accepting, declining, or marking their response as tentative. An electronic calendar invite can comprise functionality for integrating with additional tools, such as attendee bio (e.g., specialty, title, rank, etc.), video conferencing links, shared documents, or task management systems, to enhance collaboration among participants. In some implementations, an electronic calendar invite can support automatic updates when changes are made by an initiating use and/or an invitee, thereby notifying participants and adjusting the invite in to reflect the new details. Some electronic calendar systems further include privacy settings to control visibility, thereby ensuring that only authorized participants can view specific event information.

In many embodiments, one or more properties of a calendar invite can be analyzed to determine how to proceed in later activities of method 100 (if they are performed). For example, a number of properties of a calendar invite can be analyzed to determine a privacy level as described in activity 104. As another example, properties of a calendar invite can be analyzed to determine a predictive software application to pre-load in activity 102. Participant bios and/or their response to a calendar invite can be analyzed. In these embodiments, a specialty, title, and/or rank of participants can be analyzed and/or compared. Further, participants who have declined a calendar invite can be excluded from an analysis of participant bios. Shared documents (e.g., slide decks, agendas, documents, etc.) can be analyzed. In these embodiments, contents of the shared documents can be assessed by one or more predictive software applications to understand their meaning. In embodiments where a calendar invite is updated, activity 101 can be repeated.

In many embodiments, method 100 can optionally comprise an activity 102 of pre-loading one or more predictive software applications. A predictive software application can take a number of forms. For example, a predictive software application can comprise a regression analysis, a classification software application, a time series forecasting software application, a clustering software application, an ensemble learning software application, a Bayesian software application, a reinforcement learning software application, a machine learning software application, a deep learning software application, and many others. A predictive software application can be used for a number of functions. As a first example, a predictive software application can comprise a transcription software application configured to create a transcript of a spoken words. As a second example, a predictive software application can comprise a sentiment analysis software application configured to determine a mood, tone, and/or opinion based on recorded audio data. As a third example, predictive software application can comprise a machine vision software application configured to identify items and/or individuals in a digital image. As a fourth example, a predictive software application can comprise a translation software application configured to translate between two or more languages. As a fifth example, a predictive software application can comprise a motion analysis software application configured to determine a location of an electronic device from gyroscope data.

In some embodiments, a predictive software application can be specialized within its one or more functions. For example, a specialized transcription software application can be configured to recognize specialized medical terminology (e.g., within an infectious disease specialty, an orthopedic specialty, a geriatrics specialty, a pediatrics specialty, an oncology nursing specialty, etc.). As another example, a specialized transcription software application can be configured to recognize specialized legal terminology (e.g., a patent law specialty, a trademark law specialty, a class actions specialty, a mergers and acquisitions specialty, etc.). Similar concepts can apply to other types of predictive software applications (e.g., sentiment analysis, machine vision, etc.).

A specialized transcription software application can be understood as a predictive software application that has been trained on one or more datasets biased towards that specialty. In some embodiments, training a predictive software application can comprise estimating internal parameters of a predictive software application to make the software application more accurate for its intended purpose. In various embodiments, a predictive software application can be trained using labeled training data, otherwise known as a training dataset. A training dataset can comprise documents, audio clips, and/or videos within a specialty. In this way, a predictive software application can become specialized. In various embodiments, a pre-trained predictive software application can be used, and the pre-trained software application can be re-trained on the labeled training data. In some embodiments, the predictive model can also consider both historical and dynamic input from electronic devices when training. In this way, a predictive software application can be trained iteratively as data from the electronic devices are added to a training data set. In many embodiments, a predictive software application can be iteratively trained in real time as data is added to a training data set. In various embodiments, a predictive software application can be trained, at least in part, on data from a single specialty or the single specialty's data can be weighted in a training data set. In this way, a predictive software application tailored to a single user can be generated. A predictive software application tailored to a single specialty can be used as a pre-trained software application for a similar user. In several embodiments, due to the large amount of data needed to create and maintain a training data set, a predictive model can use extensive data inputs to be specially trained. Due to these extensive data inputs, in many embodiments, creating, training, and/or using a specialized predictive software application cannot practically be performed in a mind of a human being.

In many embodiments, a predictive software application can be pre-loaded onto an electronic device prior to an occurrence of a meeting described in a calendar invite. In this way, issues with latency in downloading and/or streaming the predictive software application immediately before (e.g., 15 or fewer minutes before) or during a meeting can be avoided. In many embodiments, a pre-loaded predictive software application can be smaller in storage size than an software application stored in remote storage. In this way, processing speeds for downloading and/or running the software application can be minimized. Further, storage space on an electronic device that stores the pre-loaded software application. Using a smaller pre-loaded software application can be advantageous for devices with limited storage space and/or smaller processors (e.g., mobile electronic devices and/or wearable electronic devices), as full-sized software applications can cause latency that delays an output of the software application (e.g., a real-time transcription). In many embodiments, a type of model pre-loaded onto an electronic device can depend on a bio and/or role of an individual in a meeting. For example, a predictive software application can be loaded onto an electronic device of a meeting organizer because they are likely to attend a meeting. As another example, each participant in a meeting can have a specialized predictive software application pre-loaded according to a specialty listed in their bio. In this way, software applications can be uploaded to devices with more security precautions due to the specialty, as the electronic device is already being used for the specialized purpose. In many embodiments, a pre-loaded software application can be removed from an electronic device of an individual when the individual indicates that they will not attend the meeting (e.g. when they send a rejection to the calendar invite, when a meeting is canceled, etc.).

In many embodiments, method 100 can comprise an activity 103 of receiving one or more electronic signals. Electronic signals can be received at a number of different locations. For example, electronic signals can be received at one or more electronic device running a pre-loaded software application. As another example, electronic signals can be received at an electronic device of an initiator of a calendar invite. As a further example, each electronic device in a meeting can receive electronic signals recorded on the respective electronic device and/or electronic devices can exchange electronic signals. Electronic signals can comprise one or more properties of a meeting occurring immediately (e.g., 15 minutes or less) before, at a start of, during, at an end of, and/or immediately (e.g., 15 minutes or less) after the meeting. For example, electronic signals can comprise an audio recording of the meeting, a video recording of a meeting, a screen recording of a meeting, gyroscope readings from a meeting, locations of each individual (e.g., GPS coordinates, Bluetooth beacon generated locations, RFID location readings, Wi-Fi location readings, etc.) and many others. In some embodiments, reception of one or more electronic signals can initiate a start of a meeting. For example, when two electronic devices are in close proximity to each other, a meeting can be initiated (even without a previously received calendar invite).

In many embodiments, method 100 can comprise an activity 104 of determining a privacy level. A privacy level can be understood as a measurement reflecting a needed level of data security for a meeting. In some embodiments, as a privacy level rises, more data security is needed. In other embodiments, as a privacy level is lowered, more data security is needed. A predetermined threshold can be set by an administrator for a privacy level. When a privacy level goes above (or below, depending on the embodiment) a predetermined threshold, enhanced data security protocols can be triggered. For example, when a predetermined threshold is passed, data from a meeting can be sequestered on an electronic device recording the data, as descried in more detail below. A privacy level can be determined in a number of different ways. For example, one or more properties of a meeting can be analyzed to determine a privacy level. For example, if a meeting is scheduled between two doctors, a privacy level can be raised. Further, if one or more text documents (e.g., an agenda, attached documents, and/or a slide deck) is determined to contain patient information (e.g., patient PII), then a privacy level can be raised. As another example, when tonality of a meeting's audio, sentiment of a meeting's audio, and/or proximity of individuals indicates hushed tones (e.g., whispers) and/or secrecy, then a privacy level can be raised. As a further example, when a location of a meeting is in a location where confidential information may be disclosed (e.g., a court room, boardroom, hospital, ambulance, etc.), then a privacy level can be increased. In many embodiments, a privacy level can be raised when a private set interaction technique is used. A private set interaction can be understood as a cryptographic protocol that allows two or more parties to determine an intersection of their data sets without revealing non-shared data. In other words, private set techniques enable parties in a meeting to securely find common elements between their respective meeting properties. while keeping all non-overlapping data private. In various embodiments, one or more open and/or running software applications on a device recording a meeting can be analyzed to determine a privacy level. For example, if an electronic device of a physician is accessing a patient's electronic medical record, then a privacy level can be increased.

In many embodiments, method 100 can comprise an activity 105 of initializing a predictive software application. A predictive software application can be initialized in a number of different places depending on a privacy level and/or whether the privacy level exceeded a predetermined threshold. In embodiments with a low privacy level and/or when a privacy level does not exceed a predetermined threshold, a predictive software application can be initialized on a remote server. In these embodiments, data recorded during a meeting can be transmitted to the remote server for processing by the predictive software application. For example, when no PII is being discussed, meetings between medical professionals can be transmitted to and then transcribed on a remote (e.g., cloud) server. As another example, when legal professionals are presenting during a court case and not speaking quietly with a judge at the bench, then audio data from the trial can be transmitted to a remote server for transcription. In embodiments with a high privacy level and/or when a privacy level exceeds a predetermined threshold, a predictive software application can be initiated on a local device. For example, when PII is being discussed between medical professionals, audio data can be transcribed locally on an electronic device of each medical professional. In this way, data privacy regulations can be met and disclosure of confidential patient information can be minimized or eliminated. As another example, when a sidebar is being conducted with a judge and out of earshot of a jury, then transcription of the sidebar can be performed on an electronic device recording the sidebar to preserve confidentiality of the topics discussed.

In many embodiments, method 100 can comprise an activity 105 of storing an output of a predictive model.

after transcribing the meeting, distributing the transcription to each mobile electronic device of the two or more individuals. Outputs of predictive models can be stored in a number of different places depending on a privacy level and/or whether the privacy level exceeded a predetermined threshold. In embodiments with a low privacy level and/or when a privacy level does not exceed a predetermined threshold, outputs of a predictive software application can be stored on a remote server. For example, when no PII is being discussed, transcripts of meetings between medical professionals can be stored on a remote (e.g., cloud) server. As another example, when legal professionals are presenting during a court case and not speaking quietly with a judge at the bench (e.g., conducting a sidebar), then transcripts of audio data from the trial can be stored on a remote server for storage. In embodiments with a high privacy level and/or when a privacy level exceeds a predetermined threshold, outputs of a predictive software application can be stored on a local device. For example, when PII is being discussed between medical professionals, transcripts of audio data can be stored locally on an electronic device of each medical professional. In this way, data privacy can be enhanced. As another example, when a sidebar is being conducted with a judge and out of earshot of a jury, then a transcription of the sidebar can be stored on an electronic device recording the sidebar to preserve confidentiality of the topics discussed. In many embodiments, outputs of a predictive software application that are stored locally can later be combined to create a complete record of a meeting. In these embodiments, outputs of a predictive software application can be transmitted in an encrypted fashion before being combined. In another embodiment, outputs of a predictive software application can be downloaded directly from a recording device and combined together without using a computer network.

Turning ahead in the drawings, FIG. 2 illustrates a block diagram of a system 200 that can be employed for context dependent invocation of predictive software application and data storage, as described in greater detail below. System 200 is merely exemplary and embodiments of the system are not limited to the embodiments presented herein. System 300 can be employed in many different embodiments or examples not specifically depicted or described herein. In some embodiments, certain elements or modules of system 300 can perform various procedures, processes, and/or activities. In these or other embodiments, the procedures, processes, and/or activities can be performed by other suitable elements or modules of system 300.

Generally speaking, system 300 can be implemented with hardware and/or software. Part or all of the hardware and/or software implemented in system 300 can be conventional or part or all of the hardware and/or software can be customized (e.g., optimized) for implementing part or all of the functionality of system 300 described herein.

System 300 can include a web server 201 and/or one or more web devices 202, 203. Web server 201 and/or web devices 202, 203 can each be a computer system, such as computer system 100 (FIG. 1), as described above, and can each be a single computer, a single server, a cluster or collection of computers or servers, or a cloud of computers or servers. A single computer system can also host each of two or more of web server 201 and/or one or more web devices 202, 203.

Web devices 202, 203 can comprise any of the elements described in relation to computer system 300 (FIG. 3). For example, web devices 202, 203 can be mobile devices. A mobile electronic device can refer to a portable electronic device (e.g., an electronic device easily conveyable by hand by a person of average size) with the capability to present audio and/or visual data (e.g., text, images, videos, music, etc.). For example, a mobile electronic device can comprise at least one of a digital media player, a cellular telephone (e.g., a smartphone), a personal digital assistant, a handheld digital computer device (e.g., a tablet personal computer device), a laptop computer device (e.g., a notebook computer device, a netbook computer device), a wearable user computer device, or another portable computer device with the capability to present audio and/or visual data (e.g., images, videos, music, etc.). Thus, in many examples, a mobile electronic device can comprise a volume and/or weight sufficiently small as to permit the mobile electronic device to be easily conveyable by hand. For examples, in some embodiments, a mobile electronic device can occupy a volume of less than or equal to approximately 1790 cubic centimeters, 2434 cubic centimeters, 2876 cubic centimeters, 4056 cubic centimeters, and/or 5752 cubic centimeters. Further, in these embodiments, a mobile electronic device can weigh less than or equal to 15.6 Newtons, 17.8 Newtons, 22.3 Newtons, 31.2 Newtons, and/or 44.5 Newtons. In various embodiments, user computers 330, 331 can comprise a display that is smaller than monitor 106 (FIG. 1), thereby facilitating mobility.

Exemplary mobile electronic devices can comprise (i) an iPod^{®}, iPhone^{®}, iTouch^{®}, iPad^{®}, MacBook^{®} or similar product by Apple Inc. of Cupertino, California, United States of America, (ii) a Blackberry^{®} or similar product by Research in Motion (RIM) of Waterloo, Ontario, Canada, (iii) a Lumia^{®} or similar product by the Nokia Corporation of Keilaniemi, Espoo, Finland, and/or (iv) a Galaxy^{™} or similar product by the Samsung Group of Samsung Town, Seoul, South Korea. Further, in the same or different embodiments, a mobile electronic device can comprise an electronic device configured to implement one or more of (i) the iPhone^{®} operating system by Apple Inc. of Cupertino, California, United States of America, (ii) the Blackberry^{®} operating system by Research In Motion (RIM) of Waterloo, Ontario, Canada, (iii) the Palm^{®} operating system by Palm, Inc. of Sunnyvale, California, United States, (iv) the Android^{™} operating system developed by the Open Handset Alliance, (v) the Windows Mobile^{™} operating system by Microsoft Corp. of Redmond, Washington, United States of America, or (vi) the Symbian^{™} operating system by Nokia Corp. of Keilaniemi, Espoo, Finland.

Further still, the term "wearable user computer device" as used herein can refer to an electronic device with the capability to present audio and/or visual data (e.g., text, images, videos, music, etc.) that is configured to be worn by a user and/or mountable (e.g., fixed) on the user of the wearable user computer device (e.g., sometimes under or over clothing; and/or sometimes integrated with and/or as clothing and/or another accessory, such as, for example, a hat, eyeglasses, a wrist watch, shoes, etc.). A wearable user computer device can comprise a mobile electronic device, and vice versa. However, a wearable user computer device does not necessarily comprise a mobile electronic device, and vice versa.

In specific examples, a wearable user computer device can comprise a head mountable wearable user computer device (e.g., one or more head mountable displays, one or more eyeglasses, one or more contact lenses, one or more retinal displays, etc.) or a limb mountable wearable user computer device (e.g., a smart watch, smart ring, etc.). In these examples, a head mountable wearable user computer device can be mountable in close proximity to one or both eyes of a user of the head mountable wearable user computer device and/or vectored in alignment with a field of view of the user.

In more specific examples, a head mountable wearable user computer device can comprise (i) Google Glass^{™} product or a similar product by Google Inc. of Menlo Park, California, United States of America; (ii) the Eye Tap^{™} product, the Laser Eye Tap^{™} product, or a similar product by ePI Lab of Toronto, Ontario, Canada, and/or (iii) the Raptyr^{™} product, the STAR 1200^{™} product, the Vuzix Smart Glasses M100^{™} product, or a similar product by Vuzix Corporation of Rochester, New York, United States of America. In other specific examples, a head mountable wearable user computer device can comprise the Virtual Retinal Display^{™} product, or similar product by the University of Washington of Seattle, Washington, United States of America. Meanwhile, in further specific examples, a limb mountable wearable user computer device can comprise the iWatch^{™} product, or similar product by Apple Inc. of Cupertino, California, United States of America, the Galaxy Gear or similar product of Samsung Group of Samsung Town, Seoul, South Korea, the Moto 360 product or similar product of Motorola of Schaumburg, Illinois, United States of America, and/or the Zip^{™} product, One^{™} product, Flex^{™} product, Charge^{™} product, Surge^{™} product, or similar product by Fitbit Inc. of San Francisco, California, United States of America.

Web server 201 and/or web devices 202, 203 can each comprise one or more input devices (e.g., one or more keyboards, one or more keypads, one or more pointing devices such as a computer mouse or computer mice, one or more touchscreen displays, a microphone, etc.), and/or can each comprise one or more display devices (e.g., one or more monitors, one or more touch screen displays, projectors, etc.). In these or other embodiments, one or more of the input device(s) can be similar or identical to input device 303 (FIG. 3). Further, one or more of the display device(s) can be similar or identical to monitor 106 (FIG. 1) and/or screen 108 (FIG. 1). The input device(s) and the display device(s) can be coupled to the processing module(s) and/or the memory storage module(s) of web server 201 and/or web devices 202, 203 in a wired manner and/or a wireless manner, and the coupling can be direct and/or indirect, as well as locally and/or remotely. As an example of an indirect manner (which may or may not also be a remote manner), a keyboard-video-mouse (KVM) switch can be used to couple the input device(s) and the display device(s) to the processing module(s) and/or the memory storage module(s). In some embodiments, the KVM switch also can be part of web server 201 and/or web devices 202, 203 . In a similar manner, the processing module(s) and the memory storage module(s) can be local and/or remote to each other.

Generally speaking, web server 201 can host one or more websites. For example, web server 320 can host a cloud storage website configured to allow storage and retrieval of data (e.g., outputs of a predictive software application). Web server 201 and/or web devices 202, 203 can communicate or interface (e.g., interact) with one another through internet 220. Internet 220 can be an intranet that is not open to the public, a mesh network of individual systems, and/or a distributed system. Accordingly, in many embodiments, web server 201 (and/or the software used by such systems) can refer to a back end of system 200 operated by an operator and/or administrator of system 300, and web devices 202, 203 (and/or the software used by such systems) can refer to a front end of system 200 used by one or more individuals participating in a meeting. An operator and/or administrator of system 200 can manage system 200, the processing module(s) of system 200, and/or the memory storage module(s) of system 200 using input device(s) and/or display device(s) of system 200.

Web server 201 and/or web devices 202, 203 also can be configured to communicate with one or more databases. Data can be deleted from a database when it becomes older than a maximum age, which can be set by an administrator of system 300. Data collected in real-time can be streamed to a database for storage, thereby increasing a storage speed of a database. The one or more databases can be stored on one or more memory storage modules (e.g., non-transitory memory storage module(s)), which can be similar or identical to the one or more memory storage module(s) (e.g., non-transitory memory storage module(s)) described with respect to computer system 300 (FIG. 3). Further, the one or more databases can each be stored on a single memory storage module of the memory storage module(s), and/or the non-transitory memory storage module(s) storing the one or more databases or the contents of that particular database can be spread across multiple ones of the memory storage module(s) and/or non-transitory memory storage module(s) storing the one or more databases, depending on the size of the particular database and/or the storage capacity of the memory storage module(s) and/or non-transitory memory storage module(s). In various embodiments, databases can be stored in a cache (e.g., MegaCache) for immediate retrieval on-demand. The one or more databases can each comprise a structured (e.g., indexed) collection of data and can be managed by any suitable database management systems configured to define, create, query, organize, update, and manage database(s). Exemplary database management systems can include MySQL (Structured Query Language) Database, PostgreSQL Database, Microsoft SQL Server Database, Oracle Database, SAP (Systems, Applications, & Products) Database, IBM DB2 Database, and/or NoSQL Database.

Meanwhile, communication between web server 201 and/or web devices 202, 203, and/or the one or more databases can be implemented using any suitable manner of wired and/or wireless communication. Accordingly, system 200 can comprise any software and/or hardware components configured to implement the wired and/or wireless communication. Further, the wired and/or wireless communication can be implemented using any one or any combination of wired and/or wireless communication network topologies (e.g., ring, line, tree, bus, mesh, star, daisy chain, hybrid, etc.) and/or protocols (e.g., personal area network (PAN) protocol(s), local area network (LAN) protocol(s), wide area network (WAN) protocol(s), cellular network protocol(s), powerline network protocol(s), etc.). Exemplary PAN protocol(s) can comprise Bluetooth, Zigbee, Wireless Universal Serial Bus (USB), Z-Wave, etc.; exemplary LAN and/or WAN protocol(s) can comprise Institute of Electrical and Electronic Engineers (IEEE) 802.3 (also known as Ethernet), IEEE 802.11 (also known as WiFi), etc.; and exemplary wireless cellular network protocol(s) can comprise Global System for Mobile Communications (GSM), General Packet Radio Service (GPRS), Code Division Multiple Access (CDMA), Evolution-Data Optimized (EV-DO), Enhanced Data Rates for GSM Evolution (EDGE), Universal Mobile Telecommunications System (UMTS), Digital Enhanced Cordless Telecommunications (DECT), Digital AMPS (IS-136/Time Division Multiple Access (TDMA)), Integrated Digital Enhanced Network (iDEN), Evolved HighSpeed Packet Access (HSPA+), Long-Term Evolution (LTE), WiMAX, etc. The specific communication software and/or hardware implemented can depend on the network topologies and/or protocols implemented, and vice versa. In many embodiments, exemplary communication hardware can comprise wired communication hardware including, for example, one or more data buses, such as, for example, universal serial bus(es), one or more networking cables, such as, for example, coaxial cable(s), optical fiber cable(s), and/or twisted pair cable(s), any other suitable data cable, etc. Further exemplary communication hardware can comprise wireless communication hardware including, for example, one or more radio transceivers, one or more infrared transceivers, etc. Additional exemplary communication hardware can comprise one or more networking components (e.g., modulator-demodulator components, gateway components, etc.).

Turning ahead in the drawings, FIG. 3 illustrates a block diagram of a system 300 that can be employed for context dependent invocation of predictive software application and data storage, as described in greater detail below. System 300 is merely exemplary and embodiments of the system are not limited to the embodiments presented herein. System 300 can be employed in many different embodiments or examples not specifically depicted or described herein. In some embodiments, certain elements or modules of system 300 can perform various procedures, processes, and/or activities. In these or other embodiments, the procedures, processes, and/or activities can be performed by other suitable elements or modules of system 300.

Generally speaking, system 300 can be implemented with hardware and/or software. Part or all of the hardware and/or software implemented in system 300 can be conventional or part or all of the hardware and/or software can be customized (e.g., optimized) for implementing part or all of the functionality of system 300 described herein. When implemented as software, one or more elements of system 300 can be emulated (e.g., reproduced functionally and/or by action via software). For example, a virtual machine having one or more elements described below can be instantiated on one or more elements of system 200 (FIG. 2).

When implemented as hardware, one or more of the elements of system 300 can be coupled together using one or more chassis configured to hold one or more circuit boards and/or serial bus(es). These boards and buses allow the various elements of system 300 to communicate amongst each other to accomplish their intended purposes. While elements of system 300 are described below individually, each can also be integrated into one or more chassis, circuit boards, and/or buses of system 300. On the other hand, one or more elements of system 300 can also be removable (e.g., via a PCI slot on a motherboard and/or a USB port). One or mor elements of system 300 may also be integrated and/or embedded in a different machine or manufacture. Although specific constructions of boards and buses within system 300 are not shown, it should be understood that their construction can be tied to a form factor selected for system 300.

System 300 can take a number of different form factors based on its implementation. For example, system 300 can be implemented as a desktop computer, a laptop computer, a mobile device, and/or a wearable device as described herein. Further, system 300 can comprise a single computer, a single server, a cluster or collection of computers or servers, or a cloud of computers or servers. Typically, a cluster or collection of servers can be used when the demand on 300 exceeds the reasonable capability of a single server or computer, when a distributed structure for system 300 is desired, and/or when parallel computing is desired.

In many embodiments, system 300 can comprise a processor 301, a memory storage 302, an input device 303, a graphics adapter 304, a display device 305, a graphical user interface (GUI) 306, a network adapter 307, a GPS 305, and/or a gyroscope 309.

Generally speaking, processor 301 can comprise any type of computational circuit. For example, processor 301 can comprise a microprocessor, a microcontroller, a controller, a complex instruction set computing (CISC) microprocessor, a reduced instruction set computing (RISC) microprocessor, a very long instruction word (VLIW) microprocessor, a graphics processor, a digital signal processor, application specific integrated circuits (ASICs), etc. Processor 301 can be configured to implement (e.g., run) computer instructions (e.g., program instructions) stored on memory devices in system 300. At least a portion of the program instructions, stored on these devices, can be suitable for carrying out at least part of the techniques and methods described herein. Architecture and/or design of processor 301 can be compliant with any of a variety of commercially distributed architecture families. For example, a processor can have a 32-bit (x86) architecture and/or a 64-bit (x86-64, IA64, and AMD64) architecture. Processor 301 can be configured to perform parallel computing in combination with other elements of system 300 and/or additional processors. Generally speaking, parallel computing can be seen as a technique where multiple elements of system 300 are used to perform calculations simultaneously. In this way, complex and repetitive tasks (e.g., training a predictive software application) can be performed faster and with less processing power than without parallel computing.

Generally speaking, memory storage 302 can comprise non-volatile memory (e.g., read only memory (ROM)) and/or volatile memory (e.g., random access memory (RAM)). The non-volatile memory can be removable and/or non-removable non-volatile memory. Meanwhile, RAM can comprise dynamic RAM (DRAM), static RAM (SRAM), or some other type of RAM. Further, ROM can include mask-programmed ROM, programmable ROM (PROM), one-time programmable ROM (OTP), erasable programmable read-only memory (EPROM), electrically erasable programmable ROM (EEPROM) (e.g., electrically alterable ROM (EAROM) and/or flash memory), or some other type of ROM. Memory storage 302 can comprise non-transitory memory and/or transitory memory. All or a portion of memory storage 302 can be referred to as memory storage module(s) and/or memory storage device(s). Memory storage 302 can have a number of form factors when used in system 300. For example, memory storage 302 can comprise a magnetic disk hard drive, a solid state hard drive, a removable USB storage drive, a RAM chip, etc.

Memory storage 302 can be encoded with a wide variety of computer code configured to operate system 300. For example, portions of memory storage 302 can be encoded with a boot code sequence suitable for restoring system 300 to a functional state after a system reset. As another example, portions of memory storage 302 can comprise microcode such as a Basic Input-Output System (BIOS) operable with elements of system 300. Further, portions of the memory storage 302 can comprise an operating system (e.g., a software program that manages the hardware and software resources of a computer and/or a computer network). The BIOS can be configured to initialize and test components of system 300 and load the operating system. Meanwhile, the operating system can perform basic tasks such as, for example, controlling and allocating memory, prioritizing the processing of instructions, controlling input and output devices, facilitating networking, and/or managing files. Exemplary operating systems can comprise software within the Microsoft^{®} Windows^{®}, Mac OS^{®}, Apple^{®} iOS^{®}, Google^{®} Android^{®}, UNIX^{®}, and/or Linux^{®} series of operating systems.

Input device 303 can be configured to allow a user to interact and/or control elements of system 300. A number of devices and be used as input device 303 alone or in combination. For example, input device 303 can comprise a keyboard, a mouse, a touch screen, a microphone, a camera, etc. Input device 303 can be coupled to other elements of system 300 in a number of ways. For example, input device 303 can be coupled via a Universal Serial Bus (USB) port in a wired and/or wireless manner or via a specialized port (e.g, a PS/2 port) depending on the specific device. User inputs through input device 303 can come in a number of forms. For example, when input device 303 comprises a microphone, user input can be received via voice commands and/or a speech to text software application. As another example, when input device 303 comprises a camera, user input can be received via bodily movements that are captured and interpreted by system 300.

Generally speaking, graphics adapter 304 can be configured to receive and/or generate one or more elements for display on display device 305. Exemplary embodiments of graphics adapter 304 can comprise devices within the NVIDIA^{®} GeForce^{®} and/or the AMD^{®} RX^{®} series of video cards. In many embodiments, a chipset present on graphics adapter 304 can be configured to perform similar, simultaneous computations in a manner more efficient than other chipsets. For example, rendering a 3D scene on graphics adapter 304 can involve repeated geometric calculations performed in parallel to generate the 3D scene. As another example, repeated mathematical calculations involved in training a predictive software application can be performed in parallel on graphics adapter 304 more efficiently thank on processor 301. Display device 305 can receive and display signals from graphics adapter 305. A number of devices can be used as display device 305. For example, display device 305 can comprise a computer monitor, a television, a touch screen display, a heads up display (HUD) medium, etc.

In some embodiments, display device 304 can optionally display graphical user interface (GUI) 306. GUI 306 can be a part of and/or displayed by web devices 201, 202. With regards to form, GUI 306 can comprise text and/or graphics (image) based user interfaces. For example, GUI 306 can comprise a heads up display (HUD). When GUI 306 comprises a HUD, GUI 306 can be projected onto a medium (e.g., glass, plastic, metal, etc.), displayed in midair as a hologram, and/or displayed on display device 305. GUI 306 can be color, black and white, and/or greyscale. GUI 306 can be implemented as an application running on a computer system, such as computer system 300, web server 201 (FIG. 2), and/or web devices 202, 203 (FIG. 2). GUI 306 can also comprise a website accessed through a network (e.g., internet 220 (FIG. 2)). For example, GUI 306 can comprise a cloud storage website. When GUI 306 allows for modification and/or changes to one or more settings in system 300, it can be referred to as an administrative (e.g., back end) GUI. GUI 306 can also be displayed as or on a virtual reality (VR) and/or augmented reality (AR) system or display. GUI 306 can receive a number of interactions from a user via input device 303. For example, an interaction with a GUI can comprise a click, a look, a selection, a grab, a view, a purchase, a bid, a swipe, a pinch, a reverse pinch, etc.

Network adapter 307 can be configured to connect system 300 to a computer network by wired communication (e.g., a wired network adapter) and/or wireless communication (e.g., a wireless network adapter). Network adapter 307 can be integrated into one or more chassis, circuit boards, and/or buses or be removable (e.g., via a PCI slot on a motherboard). For example, network adapter 307 can be implemented via one or more dedicated communication chips configured to receive various protocols of wired and/or wireless communications.

GPS 308 can comprise a chipset and/or module configured to communicate with a satellite based location system configured to provide location and time information. (e.g., GPS 230). This location and time information can then be used to determine a location of system 300. Gyroscope 309 can comprise a device that measures and/or maintains orientation and angular velocity. It typically consists of a rotating mass, or rotor, mounted within a frame in such a way that it can freely rotate about one or more axes. This configuration allows the gyroscope to sense changes in movement using the principles of angular momentum and the conservation of rotational energy.

For simplicity and clarity of illustration, the drawing figures illustrate the general manner of construction, and descriptions and details of some features and techniques may be omitted to avoid unnecessarily obscuring the present disclosure. Additionally, elements in the drawing figures are not necessarily drawn to scale. For example, the dimensions of some of the elements in the figures may be exaggerated relative to other elements to help improve understanding of embodiments of the present disclosure. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "include," and "have," and any variations thereof, are intended to cover a non-exclusive inclusion, such that a process, method, system, article, device, or apparatus that comprises a list of elements is not necessarily limited to those elements, but may include other elements not expressly listed or inherent to such process, method, system, article, device, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the apparatus, methods, and/or articles of manufacture described herein are, for example, capable of operation in other orientations than those illustrated or otherwise described herein.

The terms "couple," "coupled," "couples," "coupling," and the like should be broadly understood and refer to connecting two or more elements mechanically and/or otherwise. Two or more electrical elements may be electrically coupled together, but not be mechanically or otherwise coupled together. Coupling may be for any length of time, e.g., permanent or semi-permanent or only for an instant. "Electrical coupling" and the like should be broadly understood and include electrical coupling of all types. The absence of the word "removably," "removable," and the like near the word "coupled," and the like does not mean that the coupling, etc. in question is or is not removable.

As defined herein, two or more elements are "integral" if they are comprised of the same piece of material. As defined herein, two or more elements are "non-integral" if each is comprised of a different piece of material.

As defined herein, "real-time" can, in some embodiments, be defined with respect to operations carried out as soon as practically possible upon occurrence of a triggering event. A triggering event can include receipt of data necessary to execute a task or to otherwise process information. Because of delays inherent in transmission and/or in computing speeds, the term "real time" encompasses operations that occur in "near" real time or somewhat delayed from a triggering event. In a number of embodiments, "real time" can mean real time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As defined herein, "approximately" can, in some embodiments, mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Although systems and methods for context dependent invocation of predictive software application and data storage have been described with reference to specific embodiments, it will be understood by those skilled in the art that various changes may be made without departing from the spirit or scope of the disclosure. Accordingly, the disclosure of embodiments is intended to be illustrative of the scope of the disclosure and is not intended to be limiting. It is intended that the scope of the disclosure shall be limited only to the extent required by the appended claims. For example, to one of ordinary skill in the art, it will be readily apparent that any element of FIGs. 1-3 may be modified, and that the foregoing discussion of certain of these embodiments does not necessarily represent a complete description of all possible embodiments. For example, one or more of the procedures, processes, or activities of FIG. 1 may include different procedures, processes, and/or activities and be performed by many different modules, in many different orders.

All elements claimed in any particular claim are essential to the embodiment claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims, unless such benefits, advantages, solutions, or elements are stated in such claim.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. A system comprising:
one or more processors; and
one or more non-transitory memories storing computing instructions configured to communicate with the one or more processors and cause the one or more processors to perform:
receiving one or more electronic signals recording a meeting between two or more individuals;
analyzing the one or more electronic signals to determine a privacy level of the meeting;
when the privacy level is above a predetermined threshold, initializing a predictive software application locally on a mobile electronic device of at least one of the two or more individuals; and
when the privacy level is below the predetermined threshold, initializing the predictive software application remotely on a cloud server.

2. The system of claim 1, wherein the computing instructions are further configured to cause the one or more processors to perform:
prior to receiving the one or more electronic signals, analyzing a calendar invite scheduling the meeting; and
pre-loading one or more predictive software applications onto a mobile device.

3. The system of claim 2, wherein:
the analyzing the calendar invite comprises analyzing a specialty of the at least one of the two or more individuals; and
the one or more predictive software applications comprise one or more specialized transcription software applications.

4. The system of claim 2 or claim 3, wherein the one or more predictive software applications comprise a predictive software application trained on training data encoding a specialty of the at least one of the two or more individuals.

5. The system of any preceding claim, wherein the analyzing the one or more electronic signals comprises analyzing one or more of voice tonality, background noises, gyroscope data, or open software applications to determine the privacy level.

6. The system of claim 5, wherein:
the analyzing the one or more electronic signals comprises analyzing a voice tonality to determine whether the at least one of the two or more individuals is whispering; and
the computing instructions are further configured to cause the one or more processors to perform:
determining that the privacy level is above the predetermined threshold.

7. The system of any preceding claim, wherein the computing instructions are further configured to cause the one or more processors to perform:
after transcribing the meeting, distributing an output of the one or more predictive software applications to each mobile electronic device of the two or more individuals.

8. A method comprising:
receiving one or more electronic signals recording a meeting between two or more individuals;
analyzing the one or more electronic signals to determine a privacy level of the meeting;
when the privacy level is above a predetermined threshold, initializing a predictive software application locally on a mobile electronic device of at least one of the two or more individuals; and
when the privacy level is below the predetermined threshold, initializing the predictive software application remotely on a cloud server.

9. The method of claim 8 further comprising:
prior to receiving the one or more electronic signals, analyzing a calendar invite scheduling the meeting; and
pre-loading one or more predictive software applications onto a mobile device.

10. The method of claim 9, wherein:
the analyzing the calendar invite comprises analyzing a specialty of the at least one of the two or more individuals; and
the one or more predictive software applications comprise one or more specialized transcription software applications.

11. The method of claim 9 or claim 10, wherein the one or more predictive software applications comprise a predictive software application trained on training data encoding the specialty of the at least one of the two or more individuals.

12. The method of any of claims 8 to 11, wherein the analyzing the one or more electronic signals comprises analyzing one or more of voice tonality, background noises, gyroscope data, or open software applications to determine the privacy level.

13. The method of claim 12, wherein:
the analyzing the one or more electronic signals comprises analyzing a voice tonality to determine whether the at least one of the two or more individuals is whispering; and
the method further comprises:
determining that the privacy level is above the predetermined threshold.

14. The method of any of claims 8 to 11, further comprising:
after transcribing the meeting, distributing an output of the one or more predictive software applications to each mobile electronic device of the two or more individuals.

15. A non-transitory, tangible computer readable storage medium having instructions stored thereon that, in response to execution by one or more processors, cause the one or more processors to perform the method of any of claims 8 to 14.
